# FASCICULE DE BREVET EUROPEEN

(11) **EP 2 547 481 B1**
(45) Date de publication et mention de la délivrance du brevet: **25.07.2018**
(21) Numéro de dépôt: 11712791.0
(22) Date de dépôt: 11.03.2011
(51) Int. Cl.: B23K 1/00, B23K 1/19, B23K 35/30, C04B 37/00, B23K 1/20, B23K 35/02

(54) **PROCEDE D'ASSEMBLAGE DE PIECES EN MATERIAUX A BASE DE SIC PAR BRASAGE NON-REACTIF, COMPOSITION DE BRASURE, ET ASSEMBLAGE OBTENUS PAR CE PROCEDE**
VERFAHREN ZUR ZUSAMMENFÜGUNG VON TEILEN AUS MATERIALIEN AUF SIC-BASIS DURCH NICHTREAKTIVES LÖTEN, LÖTZUSAMMENSETZUNG SOWIE MIT DIESEM VERFAHREN HERGESTELLTES BAUGRUPPE
METHOD OF JOINING PARTS OF SIC-BASED MATERIALS BY NONREACTIVE BRAZING, BRAZING COMPOSITION, AND ASSEMBLY OBTAINED BY THIS METHOD

(30) Priorité: 16.03.2010 FR 1051871
(43) Date de publication de la demande: 23.01.2013
(73) Titulaire: Commissariat à l'Énergie Atomique et aux Énergies Alternatives, 75015 Paris (FR)
(72) Inventeur: CHAUMAT, Valérie, F-38760 Saint-Paul-de-Varces (FR); HENNE, Jean-François, F-62400 Bethune (FR)
(74) Mandataire: Ilgart, Jean-Christophe
(86) Numéro de dépôt international: PCT/EP2011/053691
(87) Numéro de publication internationale: WO 2011/113759

(56) Documents cités:
- WO-A1-2005/083134
- US-A- 3 813 759
- US-A- 4 990 234
- US-A- 6 139 969
- US-A1- 2003 038 166

## Description

### DOMAINE TECHNIQUE

La présente invention est relative à un procédé d'assemblage de pièces en matériaux à base de carbure de silicium par brasage non-réactif avec une composition de brasure non-réactive, afin notamment de réaliser des composants entièrement à base de carbure de silicium, voir le préambule de la revendication 1 (voir, par exemple, US3 813 759).

Le procédé d'assemblage selon l'invention est généralement mis en oeuvre à une température ne dépassant pas 1150°C, de préférence entre 1020°C et 1150°C.

L'invention a trait, en outre, à une composition de brasure, ainsi qu' à l'assemblage obtenu par ce procédé; assemblage dont la température maximale d'usage est généralement entre 850°C et 880°C, voir le préambule des revendications 15 et 17.

Par matériaux « à base de carbure de silicium », on entend généralement un matériau dont la teneur en SiC est supérieure ou égale à 50% en masse, de préférence supérieure ou égale à 80% en masse, de préférence encore de 100% en masse, dans ce dernier cas on peut dire que le matériau est constitué ou composé de carbure de silicium.

Le carbure de silicium peut se présenter sous la forme de fibres de carbure de silicium ou de poudre de carbure de silicium frittée ou liée par un liant en céramique.

Ces matériaux à base de carbure de silicium peuvent être notamment du carbure de silicium pur tel que du carbure de silicium pur α (SiCα) ou β (SiCβ), des substrats en carbure de silicium infiltré de silicium (SiSiC), ou des matériaux composites à base de SiC tels que des matériaux composites à fibres et/ou à matrice de carbure de silicium.

Le domaine technique de l'invention peut être défini comme étant le brasage à une température de mise en oeuvre (température équivalente à la température du palier de brasage) ne dépassant pas généralement 1150°C, de préférence à une température de 1020°C à 1150°C.

Les assemblages concernés par la présente invention sont donc généralement considérés comme « moyennement réfractaires » c'est-à-dire que la température maximale d'utilisation de ces assemblages est généralement de l'ordre de 850°C à 880°C.

Ces assemblages peuvent rentrer dans la fabrication de composants de formes complexes nécessitant une bonne tenue mécanique entre les substrats à base de carbure de silicium et, éventuellement, une étanchéité satisfaisante de part et d'autre du joint.

### ÉTAT DE LA TECHNIQUE ANTÉRIEURE

On sait qu'il est difficile de fabriquer des pièces de grandes dimensions en céramique, en particulier, en SiC. En effet, les tolérances après frittage des composants primaires en carbure de silicium de grandes dimensions sont mal maîtrisées et l'usinage de ces composants est inacceptable pour des raisons de coût.

Par ailleurs, et pour les mêmes raisons, il est généralement difficile de fabriquer des pièces de forme complexe avec des composés à base de silicium tels que le carbure de silicium.

Il est donc souvent préférable de fabriquer les pièces ou structures de grande dimension et/ou de forme complexe à partir d'éléments en céramique de forme simple et/ou de petite taille, puis d'assembler ces éléments pour réaliser la structure finale.

Une telle technique est notamment nécessaire pour fabriquer des structures du type échangeur de chaleur, et des composants de structure en carbure de silicium ayant une température d'utilisation pouvant aller par exemple, jusqu'à 900°C voire 1000°C.

Du fait des températures élevées, voisines par exemple de 900°C à 1000°C, mises en oeuvre dans les applications des céramiques telles que le carbure de silicium, l'assemblage de ces céramiques par collage avec des adhésifs organiques est exclu, car les températures d'usage de ce type d'assemblage ne peuvent dépasser au maximum 200°C.

Les assemblages purement mécaniques, par exemple par agrafage ou par vissage n'assurent qu'un contact partiel et aléatoire entre les pièces. Les assemblages ainsi obtenus ne peuvent pas être étanches. La tenue mécanique n'est assurée que par les agrafes et les vis, ce qui est limité. Pour assurer une bonne tenue mécanique du joint, il est indispensable de créer une bonne adhérence entre les pièces à assembler, ce qui n'est pas possible avec les vis ou agrafes.

D'autre part, les techniques classiques d'assemblage par soudage faisant intervenir un faisceau d'énergie avec ou sans métal d'apport (soudage TIG, électron ou laser) et impliquant une fusion partielle des parties à assembler sont inutilisables pour l'assemblage de céramiques du fait qu'on ne peut pas faire fondre un substrat ou une pièce en céramique, et que, en particulier, le carbure de silicium se décompose avant fusion.

Des techniques courantes pour réaliser des assemblages réfractaires de céramiques sont le soudage par diffusion en phase solide, et l'assemblage frittage ou cofrittage.

Dans l'assemblage par soudage diffusion, on applique à haute température une pression au niveau des interfaces pour permettre une inter-diffusion atomique entre les deux substrats. La température doit rester toujours inférieure à la température de fusion du matériau le moins réfractaire et il n'y a donc aucune phase liquide dans le système. Ce type d'assemblage est réalisé soit sous presse dans une seule direction, soit dans une enceinte isostatique. Le soudage diffusion est bien adapté aux assemblages entre deux alliages métalliques et très peu à l'assemblage de matériaux céramiques car les atomes constituant la céramique diffusent très peu au niveau du joint. En outre, le procédé est rédhibitoire d'un point de vue mécanique, car il nécessite de mettre en compression les substrats et les matériaux poreux et fragiles comme des composites à base de carbure de silicium, qui risquent d'être fortement endommagés lors de ce chargement mécanique en compression.

L'assemblage-frittage ou cofrittage de pièces en SiC, nécessite également de hautes pressions mais aussi de hautes températures et durées de palier importantes, car ce procédé est basé sur le principe de l'inter-diffusion entre les éléments en SiC.

En d'autres termes, le soudage par diffusion en phase solide ainsi que l'assemblage frittage présentent le désavantage d'être contraignants du point de vue de leur mise en oeuvre car :
- pour le soudage diffusion en phase solide, la forme des pièces doit rester simple si l'on utilise un pressage uniaxial, ou bien nécessiter un outillage et une préparation complexes comprenant par exemple la fabrication d'une enveloppe, la fermeture étanche sous vide, la compression isostatique à chaud, l'usinage final de l'enveloppe, si l'on utilise la CIC (Compression Isostatique à Chaud).
- dans le cas du cofrittage ou assemblage frittage, les mêmes problèmes demeurent (forme des pièces, complexité de mise en oeuvre) avec en plus la nécessité de contrôler le frittage d'une poudre d'apport à intercaler entre les deux matériaux à assembler.
- ces deux techniques nécessitent, en outre, l'utilisation de paliers de longue durée (une à plusieurs heures) à haute température puisque les processus mis en oeuvre font intervenir la diffusion à l'état solide.

Il ressort de ce qui précède, et en résumé, qu'afin de garantir notamment une bonne tenue mécanique et éventuellement une étanchéité satisfaisante au niveau de l'assemblage, seuls des procédés utilisant une phase liquide, comme le brasage, peuvent être envisagés.

Le brasage est une technique peu coûteuse, facile de mise en oeuvre, qui est la plus couramment utilisée. Des pièces de formes complexes peuvent être réalisées en faisant du brasage, et les opérations de brasage se limitent à placer entre les pièces à assembler ou à proximité du joint entre les deux pièces, un alliage de brasage, appelé brasure, ou un alliage d'apport, et à faire fondre cet alliage, qui est capable de mouiller et de s'étaler sur les interfaces à assembler pour remplir le joint entre les pièces. Après refroidissement, la brasure se solidifie et assure la cohésion de l'assemblage.

La plupart des compositions de brasure pour les pièces en matériaux à base de carbure de silicium ne sont pas suffisamment réfractaires. Il s'agit généralement de compositions de brasure constituées par des alliages métalliques ayant un point de fusion inférieur, voire très inférieur, à 1000°C. Une telle température de fusion est nettement insuffisante pour les applications à des températures voisines de 800°C ou 900°C, par exemple de 850°C à 880°C.

Par ailleurs, la plupart des éléments chimiques qui font partie de ces compositions de brasure métalliques sont fortement réactifs avec le carbure de silicium dès 500°C et créent des composés fragiles.

Par conséquent, dans le cas d'un brasage à plus haute température et mis en oeuvre généralement au-dessus de 1000°C, de telles compositions de brasure ou alliages de brasage attaqueraient chimiquement les matériaux à base de carbure de silicium non seulement pendant l'opération de brasage mais également en fonctionnement par diffusion à l'état solide.

Soulignons, en outre, que les alliages les moins réactifs sont aussi les moins réfractaires, comme par exemple, l'alliage AgCuTi avec une matrice en Ag-Cu, et un élément actif Ti à faible concentration. Pour les applications plus particulièrement visées par l'invention, qui sont celles d'un assemblage moyennement réfractaire avec une température d'utilisation des assemblages pouvant aller généralement jusqu'à 850°C, voire 880°C, toutes les compositions de brasure réactives constituées principalement d'argent ou d'argent-cuivre, de cuivre, de nickel, de fer ou de cobalt, de platine, de palladium ou d'or sont donc à exclure du fait de leur forte réactivité avec le carbure de silicium.

Des formulations d'alliages de brasage, compositions de brasure, plus réfractaires et riches en silicium sont présentées dans les documents [1, 2, 3]. Ces compositions de brasure présentent un comportement très peu réactif, voire non-réactif, avec le SiC, ce qui évite la formation des composés fragiles. Ce critère de non-réactivité ou très faible réactivité n'est toutefois pas une condition suffisante pour garantir une bonne tenue mécanique des joints brasés. En effet, dans la littérature, les valeurs des contraintes à rupture des alliages de brasage binaires à base de silicium, sont très variables en fonction du second élément intervenant dans la composition de brasure non réactive à base de silicium.

Par exemple, pour le système non-réactif Fe-Si (45 % Fe-55 % Si en masse), le document [3] mentionne une contrainte à rupture en traction extrêmement faible de l'ordre de 2 MPa, malgré la non-réactivité de cette composition indiquée dans le document [4], tandis que pour le système Cr-Si (25% Cr-75% Si en masse), ce même document [3] donne une valeur plus élevée, de l'ordre de 12 MPa.

Pour un alliage Co-Si non-réactif (90% Si- 10% Co en masse), le document [1] mentionne une valeur d'environ 100 MPa en compression/cisaillement.

Les propriétés notamment mécaniques d'une composition de brasure à base de silicium sont totalement imprévisibles et ne peuvent absolument pas se déduire des propriétés mécaniques de compositions de brasure à base de Si, même très voisines, déjà connues.

En d'autres termes, lorsque l'on cherche à préparer une composition de brasure à base de silicium, notamment pour braser des pièces à base de SiC, il n'est absolument pas possible de se baser sur les propriétés mécaniques éventuellement acceptables présentées par d'autres compositions de brasure connues à base de Si, car toute modification même très faible d'une composition de brasure à base de Si, aussi bien en ce qui concerne la nature du ou des métaux brasés avec le silicium, que leurs proportions, peut conduire à des changements imprévisibles, inattendus, très importants des propriétés de la composition, et en particulier de ses propriétés mécaniques.

En conclusion, il n'existe pas de possibilité de prédire la mécanique d'un système binaire Si-X donné où X est un métal et encore moins la mécanique d'un tel système en fonction des proportions de X.

Les températures de brasage des compositions de brasure des documents [1, 2] et [3] sont en général supérieures à 1300°C. Ces températures de brasage sont par exemple de 1355°C pour la composition Ti-Si (22-78 % en masse), de 1355°C pour la composition Cr-Si (25-75 % en masse), de 1400°C à 1450°C pour la composition Co-Si, et de 1750°C pour la composition Ru₂Si₃.

En effet, l'efficacité de ce procédé d'assemblage nécessite des températures de brasage supérieures à 1300°C pour déstabiliser thermodynamiquement les couches d'oxydes de silicium passivantes qui apparaissent spontanément sur les surfaces de carbure de silicium, car ces couches d'oxyde de silicium nuisent au mouillage par la composition de brasure, même si le brasage est réalisé sous vide.

Par conséquent, les alliages de brasage susmentionnés, riches en silicium et mis en oeuvre à une température supérieure à 1300°C ne sont pas adaptés au brasage de substrats en matériau à base de carbure de silicium dont les propriétés se dégradent après exposition à 1300°C, et a fortiori à 1150°C et même à 1100°C ou au-delà. C'est notamment le cas de certains composites SiC/SiC qui sont dégradés au-delà de 1300°C voire 1150°C, et même 1100°C. Ainsi, le CMC étudié plus loin est-il dégradé au-delà de 1100°C.

Le document [3] présente certes dans l'exemple 2, une composition de brasure Ni-Si (65%-35% en masse, soit 47%Ni-53%Si en % atomiques) dont le brasage peut être mis en oeuvre à 1120°C, pendant 16 heures. Cette température de brasage se situe légèrement au-dessus de la température de brasage préférée mise en oeuvre selon l'invention qui est de 1100°C, mais avec une durée très longue du palier de brasage. Cependant, la tenue mécanique du joint obtenu avec cette composition (contrainte à rupture en traction de 375 p.s.i. soit environ 2,6 MPa) est très faible, malgré la non-réactivité de cette composition mentionnée dans le document [5]. Cette tenue mécanique est insuffisante pour de nombreuses applications et notamment les applications principalement visées dans la présente, et ceci malgré la faible réactivité de cette brasure avec le SiC.

Dans le document [5], il est précisé que dans des études antérieures à ce document, il avait été montré que la concentration de Si dans le Nickel en équilibre avec le graphite à 1633 K est de 37±3% atomiques, et qu'en conséquence, on pouvait s'attendre à ce que les alliages Ni-Si avec des teneurs en silicium supérieures à cette valeur ne présentent pas de réactivité avec le SiC à 1633 K.

Dans ce document, on prépare des alliages Ni-Si avec des concentrations en Si de 40, 50, 67 et 85% atomiques et on montre, lors d'études de mouillage, que pour des teneurs en silicium supérieures à 40% atomiques, l'interface SiC/ Ni-Si n'est pas réactive, mais aucune donnée mécanique concernant ces alliages n'est fournie.

Les travaux exposés dans le document [5] sont centrés sur l'étude des angles de mouillage et du travail d'adhésion (adhésion thermodynamique à une interface solide / liquide, cette adhésion est définie par le travail nécessaire pour séparer de manière réversible une interface solide / liquide en deux surfaces solide / vapeur et liquide / vapeur).

Dans ce document, on ne réalise pas l'assemblage par brasage de pièces à base de carbure de silicium en utilisant en tant que composition de brasure, les alliages Ni-Si préparés et aucune indication quant aux éventuelles propriétés mécaniques de ces assemblages n'est donnée.

Notons, enfin, que pour ces alliages de brasage Ni-Si, le domaine entre le liquidus et le solidus est très étendu avec, comme on l'a déjà précisé plus haut, un début de fusion dès 966°C (pour Ni 66% en masse, et en fait pour le domaine avec au moins 40% atomiques de silicium puisqu'il y a même 2 eutectiques en se basant sur le diagramme de phase Ni-Si du document [5], un à 966°C et un à 964°C) qui limite les températures d'application en-dessous de 900°C.

Par exemple, pour la composition 30 Ni-70 Si (% massique) ou 17 Ni-83 Si(% atomiques), la fusion débute à 966°C et l'alliage est totalement liquide à 1320°C, ce qui impose un brasage vers 1350°C, ce qui est nettement au-dessus de la température limite préférée visée dans la présente.

Le document [6] mentionne un alliage de brasage ternaire Ni-13,4 Cr-40 Si (en % atomiques) dont le point de fusion est 1150°C et qui est mis en oeuvre à une température de brasage de 1200°C. Les auteurs n'ont pas réalisé de caractérisation mécanique sur les joints brasés et seulement des caractérisations métallurgiques qui indiquent l'absence de réactivité.

Aucun résultat d'essai mécanique concernant cet alliage n'est fourni si bien qu'une bonne tenue mécanique de la brasure ne peut, en aucune manière, être garantie.

Le document [2] propose (Exemple 3) un alliage Pt-Si dont le brasage est mis en oeuvre à 1200°C. La teneur en Pt de cette composition de brasure est très élevée (77% en poids de Pt), ce qui conduit à un procédé très onéreux. Cet inconvénient est rédhibitoire pour la réalisation de grandes pièces brasées.

Enfin, le document [7] présente des alliages de brasage avec une teneur en Si inférieure à 50% en masse, de préférence de 10 à 45% en masse, et avec addition d'au moins 2 éléments choisis dans le groupe suivant : Li, Be, B, Na, Mg, P, Sc, Ti, V, Cr, Mn, Fe, Co, Zn, Ga, Ge, As, Rb, Y, Sb, Te, Cs, Pr, Nd, Ta, W et Tl. Dans ce groupe d'éléments au moins l'un d'entre eux est de préférence un métal choisi parmi Fe, Cr, Co, V, Zn, Ti et Y. Le nickel n'est pas cité.

Les exemples du document [7] décrivent des compositions de brasure ternaires Si-Cr-Co (11-38,5-50,5% en masse) ; Si-Cr-Co (40-26-34 % en masse) ; Si-Fe-Cr (17,2-17,5-65,3% en masse) ; et Si-Fe-Co (20-20-60% en masse) ; et leur brasage à des températures respectives de 1230°C, 1235°C, 1460°C et 1500°C.

Les compositions de brasure du document [7] ne contiennent jamais l'élément nickel.

En ce qui concerne les compositions de brasure ayant des températures de brasage inférieures à 1300°C, il est simplement mentionné qu'une liaison « forte » est obtenue et aucun test mécanique ne vient prouver qu'une bonne tenue mécanique des joints est effectivement obtenue. De même, la faible réactivité SiC/brasure n'est ni mentionnée, ni évoquée.

Il existe donc, au vu de ce qui précède, un besoin non encore satisfait pour un procédé permettant de réaliser l'assemblage par brasage de pièces en matériaux à base de carbure de silicium, plus précisément de substrats moyennement réfractaires à base de carbure de silicium, qui assure une tenue mécanique satisfaisante de l'assemblage entre 20°C et 850°C voire 880°C, en particulier au-dessus de 500°C et jusqu'à 850°C voire 880°C, et éventuellement aussi une étanchéité du joint.

Ce procédé doit permettre d'utiliser en particulier des températures de brasage inférieures ou égales à 1150°C et de préférence à 1100°C qui est une température qu'il est absolument indispensable de ne pas dépasser pour certains substrats, pièces à assembler, à base de SiC.

En effet, il est essentiel que les pièces, substrats conservent toute leur intégrité et leurs performances initiales à l'issue de l'opération d'assemblage par brasage.

Il existe donc un besoin pour un procédé de brasage utilisant des compositions de brasure qui permettent d'atteindre les températures d'usage souhaitées, à savoir jusqu'à 850°C voire 880°C, tout en évitant de soumettre les pièces, substrats en matériaux à base de carbure de silicium à des domaines de températures qui pourraient altérer ces matériaux.

En d'autres termes, il existe un besoin pour un procédé de brasage qui permette d'obtenir des joints brasés moyennement réfractaires (avec une utilisation jusque vers 850°C voire 880°C) en utilisant des cycles de brasage ne dépassant pas généralement une température limite définie se situant entre 1020°C et 1150°C, notamment de 1100°C selon le matériau à base de SiC à assembler.

En effet, de nombreux matériaux à base de carbure de silicium, notamment certains composites, sont altérés de manière irréversible au-delà de 1100°C : c'est notamment le cas de certains composites constitués par une matrice de SiC et des fibres de SiC, comme un composite disponible auprès de la société SNECMA Propulsion Solide sous la dénomination Cerasep A40C®.

En outre, la durée du palier de brasage à une température inférieure ou égale à 1150°C, par exemple de 1100°C, doit être de préférence de une ou quelques minutes à deux ou trois heures au maximum pour éviter la dégradation du composite.

En revanche, le carbure de silicium pur supporte un brasage à 1450°C.

Autrement dit, il existe un besoin pour un procédé et une composition de brasure, alliage de brasage, permettant d'une part d'utiliser tout le potentiel réfractaire des substrats à base de carbure de silicium, avec des températures d'usage jusqu'à environ 850 °C voire 880°C, et permettant d'autre part de braser à une température de brasage inférieure à la température d'altération des substrats, avec une température de brasage inférieure ou égale à 1150°C, de préférence comprise dans la plage entre 1020°C et 1150°C, de préférence encore inférieure à 1100°C, de préférence comprise dans la plage entre 1080°C et 1100°C.

Il existe aussi un besoin pour un procédé permettant de réaliser par brasage à une température inférieure ou égale à 1150°C, de préférence entre 1020°C et 1150°C, un assemblage moyennement réfractaire (usage généralement entre 850°C et 880°C), de pièces en matériaux à base de carbure de silicium quelles que soient leur forme et/ou leur taille.

Il existe, en particulier, un besoin pour un procédé de brasage, et pour la composition de brasure associée, permettant de réaliser le brasage à une température inférieure à 1150°C, de préférence entre 1020°C et 1150°C, de pièces à base de carbure de silicium de grandes tailles et/ou de géométries complexes, présentant notamment des surfaces à braser importantes.

En outre, aucun des procédés et des compositions de l'art antérieur ne remplit simultanément les critères suivants, mis en évidence par les inventeurs, et qui sont fondamentaux pour réaliser des composants de structure en SiC impliquant des joints, moyennement réfractaires :
1) la composition de brasure doit permettre de réaliser une liaison forte entre les deux pièces en matériau à base de carbure de silicium, ce qui implique une composition de brasure non-réactive, c'est-à-dire chimiquement compatible avec le carbure de silicium, et qui ne forme pas de composés fragiles avec celui-ci. Toutefois, la non-réactivité ne garantit pas la création d'une liaison forte car celle-ci reste imprévisible. La non-réactivité est une condition nécessaire pour avoir une liaison forte mais pas suffisante. Ainsi, le système Fe-Si cité dans la littérature [3] est non-réactif mais sa tenue mécanique est très faible.
2) la composition de brasure doit bien mouiller le carbure de silicium et bien adhérer à celui-ci. Ce très bon mouillage est indispensable pour la qualité des joints car il assure notamment une bonne qualité du remplissage du joint mais il ne permet pas de garantir un bon comportement mécanique, car ce dernier est une propriété non prévisible.
3) la composition de brasure doit être compatible avec tous les dispositifs de chauffage notamment les dispositifs de chauffage rapides et/ou localisés.
4) la composition de brasure doit permettre la formation de joints présentant une bonne tenue mécanique.
5) la composition de brasure doit être constituée d'un nombre limité d'éléments, afin de faciliter sa préparation et sa mise en oeuvre.
6) la composition de brasure ne doit pas contenir d'éléments onéreux, tels que des métaux précieux.

Enfin, le procédé et la brasure associée doivent permettre le brasage, l'assemblage de tout type de matériau à base de carbure de silicium et doivent pouvoir facilement s'adapter à toute céramique spécifique à base de carbure de silicium.

Le but de l'invention est donc de fournir un procédé d'assemblage par brasage de pièces ou composants en matériaux à base de carbure de silicium qui réponde, entre autres, aux besoins cités plus haut, qui satisfait, entre autres, à l'ensemble des exigences et critères mentionnés ci-dessus, qui élimine les inconvénients, défauts, limitations rencontrés avec les procédés de l'art antérieur, et qui résolve les problèmes des procédés de l'art antérieur.

Le but de l'invention est notamment de fournir un procédé d'assemblage par brasage de pièces ou composants en matériaux à base de carbure de silicium qui permette d'obtenir une tenue mécanique satisfaisante de l'assemblage au-dessus de 500°C et jusqu'à 850°C, voire 880°C, qui utilise des températures de brasage inférieures ou égales à 1150°C, de préférence se situant entre 1020°C et 1150°C, et de préférence encore inférieures ou égales à 1100°C, par exemple de 1080°C à 1100°C, et qui éventuellement permette d'obtenir des joints avec une excellente étanchéité.

### EXPOSÉ DE L'INVENTION

Ce but, et d'autres encore, sont atteints conformément à l'invention par un procédé d'assemblage d'au moins deux pièces en matériaux à base de carbure de silicium par brasage non-réactif tel que défini dans la revendication 1, dans lequel on met en contact les pièces avec une composition de brasure non-réactive, on chauffe l'ensemble formé par les pièces et la composition de brasure à une température de brasage suffisante pour faire fondre totalement ou au moins partiellement la composition de brasure, et on refroidit les pièces et la composition de brasure afin de former après solidification de celle-ci un joint moyennement réfractaire ; dans lequel la composition de brasure non-réactive est un alliage binaire, constitué, en pourcentages atomiques, de 60% à 66% de silicium, et de 34% à 40% de nickel.

La fusion de la composition de brasure est généralement considérée comme totale lorsqu'elle se trouve dans un état liquide, à une température supérieure ou égale au liquidus. La fusion de la composition de brasure est généralement considérée comme partielle lorsqu'elle se trouve dans un état que l'on peut qualifier de semi-solide, visqueux, ramolli, à une température située entre le solidus et le liquidus.

Généralement, le brasage est réalisé à une température de brasage inférieure ou égale à 1150°C, de préférence la température de brasage est de 1020°C à 1150°C, de préférence encore de 1080°C à 1100°C.

Par joint moyennement réfractaire, on entend généralement que ce joint est généralement capable de résister à des températures de fonctionnement allant jusqu'à 850°C voire 880°C.

Le procédé selon l'invention, qui est un procédé de brasage à une température inférieure ou égale à 1150°C, de préférence de 1020°C à 1150°C, de préférence encore de 1080°C à 1100°C, mettant en oeuvre une composition de brasure spécifique, n'a jamais été décrit dans l'art antérieur.

En particulier, la composition de brasure spécifique mise en oeuvre selon l'invention qui, de manière étonnante permet le brasage à une température inférieure ou égale à 1150°C, de préférence de 1020°C à 1150°C, de préférence encore de 1080°C à 1100°C, de pièces en matériaux à base de carbure de silicium n'est en aucune manière mentionnée dans les documents de l'art antérieur cités plus haut.

Ainsi, le document [7] ne mentionne pas le nickel dans la liste de 27 éléments, parmi lesquels au moins deux doivent être choisis pour former une composition de brasure avec le silicium, ce dernier étant toujours présent à moins de 50% en masse. Dans cette liste, Fe, Cr, Co, V, Zn, Ti et Y sont préférés et le nickel, n'est, a fortiori pas cité parmi les éléments préférés.

Aucun des alliages de brasage particulièrement préférés de ce document qui sont les alliages de silicium, de chrome et de cobalt, les alliages de silicium, de chrome et de fer, et les alliages de silicium, de fer et de cobalt, et aucune des compositions de brasure exemplifiées dans ce document ne contient du nickel.

En outre, les alliages décrits dans ce document sont beaucoup plus complexes que l'alliage binaire Si-Ni mis en oeuvre selon l'invention. Les alliages de brasage de ce document sont au minimum des alliages ternaires polyconstitués dont l'élaboration et la maîtrise des propriétés sont beaucoup plus délicates que celles des alliages binaires.

Les compositions de brasure des exemples fournis dans le document [7] sont limitées aux systèmes ternaires SiFeCo, SiFeCr, SiCrCo avec une teneur en Si inférieure à 40% massique. Ces compositions ne contiennent pas de nickel, et globalement un nombre très réduit d'éléments par rapport à la liste des 27 éléments d'ajouts possibles. Ajoutons également que les compositions de brasure selon l'invention ont des concentrations en silicium supérieures à 45% en masse, c'est-à-dire une concentration en Si supérieure à celles indiquées dans le document [7].

Le document [7] ne contient aucune indication pouvant conduire à préparer un alliage de brasage binaire, puisqu'il concerne des alliages contenant au minimum trois éléments. Le document [7] ne contient ensuite aucune indication pouvant conduire à choisir le nickel, et a fortiori, une teneur spécifique en celui-ci pour préparer un alliage de brasure binaire, compatible avec le SiC, et assurant un brasage à une température de 1020°C à 1150°C, de préférence de 1080°C à 1100°C, de pièces à base de SiC, et un assemblage effectif de ces pièces.

Dans le document [5], on étudie le mouillage du SiC par du nickel pur, du silicium pur et par des alliages comprenant 40, 50, 67 et 85% atomiques de silicium. Comme on l'a déjà précisé plus haut, aucune opération de brasage n'est réalisée avec ces alliages et ce document ne fournit aucune donnée quant à la tenue mécanique éventuelle d'assemblages qui pourraient être réalisés avec ces alliages.

Seules des données relatives à la non-réactivité et au bon mouillage du SiC par des alliages de teneurs en Si supérieures à 40% atomiques sont divulguées. Comme on l'a vu plus haut, de bonnes propriétés de mouillage et/ou de non-réactivité d'un alliage ne peuvent en aucune manière garantir le bon comportement mécanique de cet alliage lorsqu'il est utilisé pour l'assemblage de pièces en SiC, et les bonnes propriétés mécanique de cet assemblage.

Le procédé selon l'invention répond aux besoins, satisfait à l'ensemble des exigences et des critères mentionnés ci-dessus, et ne présente pas les inconvénients des procédés de l'art antérieur.

En particulier, le procédé selon l'invention permet pour la première fois la préparation d'assemblages moyennement réfractaires, c'est-à-dire avec une température de mise en oeuvre pouvant aller jusqu'à 850°C, voire 880°C, de pièces en matériaux à base de carbure de silicium quelles que soient leur géométrie, même très complexe et/ou leur taille.

Le procédé selon l'invention assure dans tous les cas, notamment, un bon remplissage du joint par la brasure, et de manière totalement surprenante, une excellente tenue mécanique de l'assemblage à température ambiante et à chaud, en particulier au-dessus de 500°C et jusqu'à 850°C-880°C, et éventuellement une bonne étanchéité du joint.

Le procédé selon l'invention est, en outre, simple, fiable, facile à mettre en oeuvre et au total peu onéreux.

En d'autres termes, les multiples avantages et effets surprenants de l'invention peuvent être énumérés comme suit, sans que cette énumération ne soit considérée comme limitative :
- en fonction de la composition de l'alliage de brasage sélectionné, plusieurs températures de brasage sont possibles entre 1020°C et 1150°C et peuvent ainsi répondre à différents cahiers des charges ;
- l'assemblage obtenu selon l'invention permet de garantir un très bon accrochage mécanique entre les substrats à base de carbure de silicium même pour des températures maximales d'usage, d'utilisation, supérieures à 500°C et pouvant aller par exemple jusqu'à 850°C, voire 880°C. Les ruptures ont lieu en mode "cohésif", c'est-à-dire que les fissures ont lieu dans les substrats à base de carbure de silicium et non pas au niveau du joint brasé ;
- la température de brasage est inférieure ou égale à 1150°C, de préférence de 1020°C à 1150°C, et de préférence encore de 1080 à 1100°C, il est donc possible avec le procédé selon l'invention d'assembler des pièces, substrats à base de carbure de silicium qui ne peuvent pas supporter des températures supérieures à 1150°C, comme des pièces, substrats en composite à matrice céramique comme le Cerasep A40C®. En d'autres termes, le procédé selon l'invention permet de réaliser le brasage de matériaux à base de SiC qui se dégradent dès 1150°C, voire 1100°C. Le procédé selon l'invention s'applique bien sûr au SiC pur ou quasiment pur, par exemple le SiC fritté (en général le SiC fritté contient des ajouts de frittage, il n'est donc pas parfaitement pur) pour lequel on peut utiliser des températures de brasage supérieures à 1300°C, mais aussi à des matériaux moins stables en mettant en oeuvre des compositions de brasure adaptées à ces matériaux moins stables thermiquement ;
- de manière surprenante, malgré la température de brasage inférieure ou égale à 1150°C, de préférence de 1020°C à 1150°C, et de préférence encore de 1080 à 1100°C, mise en oeuvre dans le procédé de l'invention, un excellent mouillage de la composition de brasure, de l'alliage de brasage selon l'invention sur les surfaces des substrats, pièces, à base de carbure de silicium à assembler, a été constaté. Ainsi, grâce à ce bon mouillage des surfaces, il est possible selon l'invention de faire du brasage capillaire car la composition de brasure selon l'invention peut remplir toute seule le joint entre les pièces pendant l'opération de brasage pour des joints de quelques microns à quelques dizaines de microns mais aussi pour des joints plus épais dont l'épaisseur peut atteindre 500 µm ;
- une absence de réactivité de l'alliage de brasure sur les substrats à base de carbure de silicium a été observée à l'échelle du microscope électronique à balayage. Il n'y a pas de zones fragilisantes complexes et poreuses au niveau de l'interface ;
- le brasage réalisé par le procédé selon l'invention est réversible. Il est ainsi possible de désunir, séparer, les pièces, substrats assemblés, par exemple en vue de leur réparation, en faisant fondre l'alliage de brasage dans un four au cours d'une seconde opération de fusion de cet alliage de brasage, sans altérer les pièces, substrats. Les pièces, substrats peuvent également être séparés par une attaque chimique. En d'autres termes, le procédé selon l'invention permet la réparation des pièces assemblées en matériau à base de carbure de silicium. Cela signifie que ces pièces peuvent subir un second cycle de brasage, si besoin, pour réparation sans dégradation des propriétés des joints. Cette capacité de réparation est possible du fait de l'absence de réactivité ou de la très faible réactivité des alliages de brasage mis en oeuvre selon l'invention avec le carbure de silicium ;
- une autre propriété remarquable obtenue par le procédé selon l'invention est l'homogénéité du joint obtenu après brasage et le très bon comportement mécanique des joints formés ;
- il n'est pas nécessaire dans le procédé selon l'invention de métalliser par la brasure les pièces, substrats, en matériau à base de SiC avant l'opération de brasage à une température inférieure ou égale à 1150°C, les joints sont bien remplis par la composition de brasure selon l'invention, même en configuration capillaire ;
- il n'est, en outre, pas nécessaire dans le procédé selon l'invention de déposer du carbone sur les pièces, substrats, en matériau à base de SiC avant l'opération de brasage notamment à une température inférieure à 1150°C. La cinétique de mouillage est rapide et l'angle de mouillage est bon.

Par exemple, sur un composite SiC/SiC Cerasep A40C®, l'angle est de l'ordre de 40° dès 5 minutes de palier à 1100°C, et de l'ordre de 30° après 30 minutes de palier ; et sur SiC fritté, il est de l'ordre de 60° dès 5 minutes de palier à 1100°C et inférieur à 40° après 30 minutes (cf. exemples 1 et 2). Les joints sont bien remplis par la composition de brasure selon l'invention, même en configuration capillaire.
- les compositions de brasure selon l'invention ne contiennent aucun élément chimique précieux, notamment des métaux de la famille du platine ou du rhodium, ce qui limite leur coût et le coût du procédé les mettant en oeuvre, par rapport à de nombreuses compositions de l'art antérieur ;
- les joints brasés obtenus par le procédé selon l'invention sont généralement étanches. Le procédé selon l'invention est, par conséquent, adapté pour des opérations de scellement devant résister à des températures maximales entre 850°C et 880°C selon la composition de l'alliage de brasage.

Comme on l'a déjà mentionné plus haut, le comportement des compositions de brasure plus particulièrement pour le brasage du SiC, est extrêmement imprévisible et ne peut en aucun cas se déduire du comportement des compositions de brasure voisines. La composition de brasure selon l'invention est définie dans la revendication 15. Avantageusement, la composition de brasure selon l'invention est un alliage binaire constitué en pourcentages atomiques, de 63% à 65% de silicium et de 35% à 37% de nickel.

La composition préférée selon l'invention est constituée en pourcentages atomiques de 64% de silicium et de 36% de Ni, soit en pourcentages massiques de 54% de Ni et de 46% de Si.

Cette composition préférée présente une température de solidus de 966°C et une température de liquidus de 1070°C.

Les différentes compositions de brasure définies par les pourcentages avantageux, précisés ci-dessus ne sont, a fortiori, ni décrites ni suggérées dans l'art antérieur.

Avantageusement, dans le procédé selon l'invention, on peut former une poudre de composition de brasure, mettre en suspension cette poudre dans un liant organique de façon à obtenir une suspension ou pâte de composition de brasure, et déposer sur au moins une surface d'au moins une des pièces à assembler la suspension ou pâte de composition de brasure obtenue.

Ainsi, on peut enduire une surface à assembler d'au moins l'une des pièces à assembler avec la suspension ou pâte de composition de brasure, puis mettre en contact les surfaces à assembler des pièces de façon à ce que la suspension ou pâte de composition de brasure soit intercalée entre celles-ci.

Ou bien, on peut mettre en contact les surfaces à assembler des pièces à assembler en observant un décalage entre celles-ci de façon à créer une surface libre susceptible de recevoir la suspension ou pâte de composition de brasure à proximité du joint formé par les surfaces à assembler des pièces à assembler, puis on peut déposer la suspension ou pâte de composition de brasure sur cette surface libre, par exemple sous la forme d'un cordon.

Préalablement à la mise en contact avec la composition de brasure, un dépôt de carbone sur au moins une des surfaces à assembler des pièces n'est pas utile.

C'est là précisément un autre des avantages du procédé selon l'invention que de pouvoir se passer de ce dépôt de carbone, ce qui évite une étape supplémentaire dans le procédé de brasage.

Avantageusement, le brasage peut être effectué à une température de brasage supérieure d'au moins 15°C, de préférence d'au moins 30°C, à la température de fusion de la composition de brasure.

Pour le brasage de surfaces à braser poreuses, par exemple pour des matériaux composites dont le revêtement en SiC en surface ne serait pas assez épais, il peut être utile de réaliser le brasage à une température comprise entre le liquidus et le solidus de la composition de brasure afin d'avoir une brasure à l'état semi-solide lors du palier de brasage. La brasure est alors visqueuse et l'infiltration de la brasure dans les porosités peut être mieux contrôlée.

Avantageusement, le brasage peut être réalisé en effectuant un palier de brasage à une température de brasage de 1020°C à 1150°C, de préférence de 1080°C à 1100°C, maintenue pendant une durée de 1 à 150 minutes, de préférence de 30 à 150 minutes, de préférence encore de 60 à 120 minutes, mieux de 90 à 120 minutes.

Dans le cas où au moins une surface à assembler des pièces à assembler est poreuse, on peut effectuer un palier de brasage à une température de 1020°C à 1080°C pendant une durée de 1 à 30 minutes.

En d'autres termes, pour des matériaux présentant des surfaces à braser relativement poreuses, tels que des matériaux composites dont le revêtement en SiC ne serait pas assez épais, il peut être utile de réduire la durée courante du brasage qui est généralement de 30 à 150 minutes, à une durée de quelques minutes, à savoir par exemple, une durée entre 1 et 30 minutes, afin d'éviter trop d'infiltration de la brasure dans les porosités du matériau au détriment du remplissage du joint.

Dans ce cas, notons également que les températures de brasage les plus basses sont généralement recommandées pour limiter l'infiltration, à savoir généralement entre 1000°C ou 1020°C et 1080°C.

Avantageusement, préalablement au palier de brasage, on peut observer un premier palier à une température généralement de 850°C à 910°C, par exemple de 900°C, maintenue pendant une durée de 30 à 180 minutes, de préférence de 60 à 180 minutes, de préférence encore de 90 à 180 minutes, par exemple de 120 minutes.

Avantageusement, les matériaux à base de carbure de silicium peuvent être choisis parmi les carbures de silicium pur tels que le carbure de silicium pur α (SiCα) ou β (SiCβ), et les matériaux composites à base de SiC tels que les composites à fibres et/ou à matrice de carbure de silicium.

Plus particulièrement, les matériaux à base de carbure de silicium peuvent être choisis parmi le carbure de silicium fritté sans pression ("PLS-SiC") ; le carbure de silicium infiltré Si ("SiSiC" ou "RBSC") ; le carbure de silicium recristallisé poreux ("RSiC") ; le graphite silicium ("C-SiC") constitué de graphite et recouvert par une couche de SiC ; les composites SiC/SiC ; par exemple, à fibres ou à « whiskers » ; les composites SiC/SiC à matrice auto-cicatrisante ; les composites C/SiC, par exemple, à fibres ou à « whiskers » de carbone et à matrice SiC ; les monocristaux de SiC ; les composites du SiC avec une autre céramique, par exemple les composites SiC/Si₃N₄ et SiC/TiN.

Généralement, lesdits matériaux à base de carbure de silicium ont une teneur en carbure de silicium au moins égale à 50% en masse, de préférence au moins égale à 80% en masse, et de préférence encore égale à 100% en masse.

L'invention concerne également la composition de brasure, qui ont été décrites plus haut dans le cadre de l'exposé du procédé selon l'invention.

L'invention a trait, en outre, à une pâte, suspension, de brasure pour le brasage, par exemple le brasage moyennement réfractaire, non-réactif de pièces en matériaux à base de carbure de silicium comprenant une poudre d'une composition de brasure selon l'invention telle que définie plus haut, et un liant, cément organique liquide, ou un gel organique visqueux.

L'invention concerne, en outre, l'assemblage comprenant au moins deux pièces en matériaux à base de SiC, obtenus par le procédé selon l'invention décrit ci-dessus, voir la revendication 17. D'autres caractéristiques et avantages de l'invention ressortiront mieux à la lecture de la description qui va suivre, donnée à titre illustratif et non limitatif en relation avec les dessins joints, dans lesquels :

### BRÈVE DESCRIPTION DES DESSINS

- La Figure 1 est une vue schématique montrant la disposition des plaques de matériau à base de SiC et de la pâte de composition de brasure pour le brasage en configuration « sandwich ».
- La Figure 2 est une vue schématique montrant la disposition des plaques de matériau à base de SiC et de la pâte de composition de brasure pour le brasage en configuration capillaire.
- La Figure 3 est un graphique qui représente le cycle thermique de brasage utilisé dans les exemples 3 et 4. En abscisse est portée la durée en minutes depuis le début du traitement thermique, et en ordonnée est portée la température T en °C.
- La Figure 4 est une vue schématique des éprouvettes utilisées pour les essais mécaniques, notamment en compression / cisaillement des joints et assemblages préparés dans les exemples 3 et 4.

### EXPOSÉ DÉTAILLÉ DE MODES DE RÉALISATION PARTICULIERS

La première étape du procédé selon l'invention consiste, tout d'abord, généralement, à préparer, élaborer une composition de brasure, en d'autres termes un alliage de brasage contenant du silicium, et du nickel.

L'alliage de brasage selon l'invention est un alliage binaire Silicium(Si)-Nickel(Ni).

La température de fusion de l'alliage de brasage selon l'invention est généralement comprise entre 966°C (solidus = eutectique, début de fusion commun à toutes les compositions du domaine) et 1125°C (liquidus de la composition la plus riche en silicium), la composition préférée présente une température de liquidus à 1070°C. L'élément prépondérant de l'alliage est le silicium.

Les proportions massiques pour l'alliage ternaire Si-Ni sont en pourcentages atomiques de 60% à 66% de silicium, et de 34% à 40% de nickel.

Des proportions avantageuses et des proportions particulièrement avantageuses ou préférées ont été indiquées plus haut.

La composition de brasure est, généralement, une composition pulvérulente qui peut être préparée, par exemple, en synthétisant, tout d'abord, à partir des éléments purs Si, et Ni, un composé intermétallique contenant du silicium et du nickel.

La synthèse d'un tel composé inter-métallique se fait, par exemple, en introduisant le silicium -par exemple, sous la forme de morceaux-, le nickel -par exemple, sous la forme de morceaux ou autres- dans les proportions voulues pour la composition de brasure, dans un creuset réfractaire en alumine, par exemple.

L'ensemble formé par le creuset, le silicium, et le nickel est disposé dans un appareil de chauffage, tel qu'un four graphite ou un four métallique, et est chauffé à une température généralement de 1200°C à 1300°C, par exemple de 1250°C, de préférence sous argon, pendant une durée de 60 à 120 minutes, par exemple de 120 minutes, pour faire fondre les différents constituants de la composition de brasure et obtenir après refroidissement le composé inter-métallique final désiré, homogène sous la forme d'un lingot. La température de chauffage est de préférence de 1250°C pour la composition préférée selon l'invention.

La fabrication du lingot peut également se faire par élaboration en creuset froid.

Cette technique de fusion sans contact (creuset en cuivre refroidi par circulation d'eau et placé dans un inducteur) permet de fondre l'alliage sans contact avec le creuset et de le récupérer sans usinage du creuset.

Le lingot de composé inter-métallique obtenu est ensuite broyé dans tout appareil adéquat, par exemple, dans un mortier pour obtenir une poudre de granulométrie adéquate, c'est-à-dire, dont les grains ont, par exemple, un diamètre de 1 à 300 µm et qui constitue la composition de brasure.

Ou bien, la composition de brasure binaire selon l'invention peut être préparée, par exemple, en pesant de la poudre de silicium pur, et de la poudre du composé intermétallique NiSi₂ et/ou NiSi dans les proportions retenues pour la composition de brasure selon l'invention et en mélangeant ensuite ces poudres dans un « Turbula » pendant au moins 30 minutes.

La poudre composée du mélange des poudres de composé inter-métallique et de Si constitue, dans ce cas, la composition de brasure.

Ledit composé intermétallique NiSi₂ ou NiSi peut être synthétisé, ou bien il s'agit d'un composé du commerce se présentant sous la forme d'une poudre de composé inter-métallique de granulométrie et de puretés connues.

La poudre de silicium pur peut être préparée à partir de morceaux de silicium pur broyé dans tout appareil adéquat, par exemple, dans un mortier, pour obtenir une poudre de granulométrie adéquate dont les grains ont, par exemple, un diamètre de 1 à 250 µm.

Au lieu d'être ainsi préparée, ladite poudre de silicium pur peut également être une poudre du commerce de granulométrie et de pureté connues. Parmi ces poudres du commerce, on peut citer, par exemple : la poudre de Si pur, de marque CERAC®, de pureté de 99,5 % ou 99,99 % et de granulométrie de l'ordre de 50 µm.

La poudre de composition de brasure, (Si et Ni), est mise en suspension de manière classique dans un liant, cément, gel organique liquide, de préférence à la fois visqueux et collant, afin d'obtenir une pâte, suspension de composition de brasure permettant un étalement homogène sur les surfaces des pièces, substrats en matériau à base de carbure de silicium à braser.

Le liant, cément, gel se décompose généralement par exemple entre 100 et 300°C sans laisser de traces. Il peut s'agir par exemple d'un cément de type NICROBRAZ® ou d'un gel (gel VITTA®).

La deuxième étape du procédé selon l'invention consiste généralement à réaliser l'assemblage par brasage proprement dit.

Préalablement à l'assemblage, les deux (ou plus) surfaces des pièces en matériaux à base de SiC à assembler sont généralement dégraissées, nettoyées, dans un solvant organique par exemple du type cétone, ester, éther, alcool, ou un mélange de ceux-ci, etc.

Un solvant préféré est l'acétone ou un mélange acétone-alcool éthylique-éther par exemple dans les proportions 1/3, 1/3, 1/3 ; on peut aussi nettoyer les pièces successivement avec plusieurs solvants différents par exemple avec de l'acétone puis de l'éthanol. Les pièces sont ensuite séchées.

Les pièces en matériaux à base de SiC à assembler sont en général au nombre de deux, mais on peut aussi assembler simultanément un plus grand nombre de pièces pouvant aller jusqu'à 100.

Par pièce en matériau à base de SiC, on entend généralement tout élément, ou entité de forme et de taille quelconques entrant par exemple, après assemblage avec une ou plusieurs autres pièces, dans des structures de plus grande dimension.

Selon l'invention, il est possible d'assembler, avec à chaque fois d'excellents résultats, des pièces de géométrie, forme complexe et/ou de grande taille, par exemple avec 0,5 m² de surface à braser ou plus.

Par matériau à base de carbure de silicium, on entend généralement ici tous les matériaux comprenant au moins 50% en masse de carbure de silicium, de préférence au moins 80% en masse de carbure de silicium, de préférence encore 100% en masse de carbure de silicium, dans ce dernier cas, le matériau est constitué, composé, uniquement de carbure de silicium.

Les matériaux à base de carbure de silicium peuvent être notamment sous forme de poudre frittée ou infiltrée ou de fibres liées par une matrice céramique.

Les matériaux à base de carbure de silicium peuvent être choisis parmi les carbures de silicium pur tels que le carbure de silicium pur α (SiCα) ou β (SiCβ) et les matériaux composites à base de SiC tels que les composites à fibres et/ou à matrice de carbure de silicium.

Comme exemples de matériaux à base de SiC, on peut citer le carbure de silicium dense pur ou carbure de silicium fritté sans pression ("PLS-SiC", à savoir « PressureLess Sintered SiC », en anglais) ; le carbure de silicium infiltré Si (appelé SiSiC ou RBSC contenant 5 à 20 % Si) ; le carbure de silicium recristallisé poreux (appelé RSiC) ; le graphite silicium (C-SiC) constitué de graphite et recouvert par une couche de SiC par exemple de 0,1 à 1 mm d'épaisseur ; ainsi que les composites SiC/SiC, par exemple, à fibres ou à « Whiskers » ; les composites SiC/SiC à matrice auto-cicatrisante ; les composites C/SiC, par exemple, à fibres ou à « Whiskers » de carbone et à matrice SiC ; et encore les monocristaux de SiC ; et les composites du SiC avec une autre céramique, par exemple, les composites SiC/Si₃N₄ et SiC/TiN.

De préférence, le matériau à base de silicium des substrats, pièces à assembler selon l'invention est constitué à 100% de carbure de silicium, choisi par exemple parmi les nuances de carbure de silicium fritté pur α (SiCα) ou β (SiCβ) ou parmi les composites à fibres de carbure de silicium avec une matrice en carbure de silicium.

Il a été constaté, de manière surprenante, que le procédé de l'invention permettait un brasage des composites avec d'excellents résultats.

Les deux pièces ou plus à assembler peuvent être en un même matériau, à base de carbure de silicium par exemple en PLS (« Pressureless Sintered ») -SiC, ou en composite SiC-SiC ou chacune des pièces peut être en un matériau à base de carbure de silicium différent.

La suspension, pâte de la composition de brasure préparée comme cela a été décrit précédemment, est étalée, enduite, appliquée de manière homogène, uniforme, par exemple avec une brosse, une spatule, un pinceau, ou à l'aide d'une seringue éventuellement fixée à un système robotisé, ou à l'aide de tout autre moyen permettant de déposer une couche de pâte de brasure uniforme, sur la surface d'au moins l'une des pièces en matériau à base de carbure de silicium à assembler.

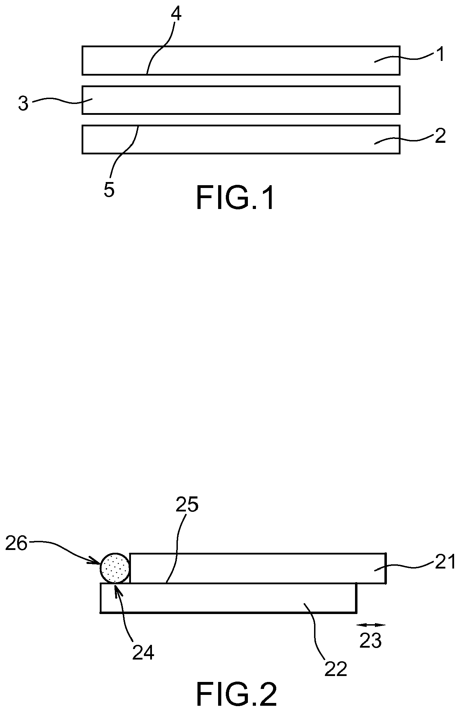

Puis, on met en contact la ou les surface (s) enduite(s) de pâte des deux pièces (1, 2) à assembler. Cette configuration de brasage, illustrée sur la Figure 1 est appelée « configuration sandwich » car la pâte de la composition de brasure (3) est placée directement entre les surfaces (4, 5) des pièces à assembler.

De préférence, dans cette configuration « sandwich », il est recommandé, pour la composition de brasure selon l'invention, que la pâte de brasure ne soit pas répartie uniformément mais sous la forme de cordons de brasure qui ne se touchent pas afin d'éviter une configuration trop confinée.

La quantité de pâte, suspension de composition de brasure à mettre en oeuvre dans cette configuration est généralement de 10 mg/cm² à 60 mg/cm², par exemple de 20 mg/cm².

La configuration « sandwich » s'applique aussi bien pour des joints « fins », c'est-à-dire d'une épaisseur inférieure à 500 micromètres, que pour des joints « épais », c'est-à-dire d'une épaisseur supérieure ou égale à 500 micromètres.

Ou bien comme cela est représenté sur la Figure 2, les pièces à assembler par exemple sous la forme de plaques (21, 22), sont mises en contact, sans avoir mis de composition de brasure entre elles en observant un écart, décalage (23) entre celles-ci, généralement de quelques mm, par exemple de 1 mm, 2 mm, à 10 mm de façon à créer une surface libre (24) susceptible de recevoir la suspension ou pâte à proximité du joint (25) formé par les surfaces à assembler des pièces à assembler, puis on dépose la suspension ou pâte de composition de brasure par exemple sous la forme d'un cordon de brasure (26) sur cette surface à proximité du joint, au voisinage du joint, ou au bord du joint. Pendant le cycle thermique de brasage, la composition de brasure liquide s'infiltre dans le joint.

Cette configuration de brasage est appelée « configuration capillaire ». Avec les compositions de brasure selon l'invention, il est possible de réaliser un tel brasage capillaire, avec une infiltration de la brasure liquide dans le joint de brasage pendant le cycle de brasage, sans disposer directement la composition de brasure entre les pièces à assembler comme dans le cas de la « configuration sandwich ».

Cette configuration capillaire est même préférée pour le système Ni-Si car elle permet d'obtenir un meilleur remplissage du joint par la brasure.

La quantité de pâte, suspension de composition de brasure à mettre en oeuvre dans cette configuration capillaire est généralement de 10 mg/cm² à 40 mg/cm², par exemple de 20 mg/cm².

Le brasage capillaire est possible avec le système Ni-Si pour des joints « fins » d'une épaisseur inférieure à 500 µm en l'absence de renforts placés au préalable dans le joint. Le brasage capillaire a conduit à un bon remplissage, par la brasure NiSi de joints dont l'épaisseur peut varier entre quelques microns et presque 500 µm dans le cas des pièces en composite SiC/SiC qui présentent des défauts de surface.

Les pièces prêtes à être brasées sont alors disposées dans un dispositif de chauffage tel qu'un four ou soumises à un chauffage par tout autre moyen adéquat.

Le four est généralement un four graphite ou un four métallique, sous vide ou sous atmosphère de gaz neutre.

Généralement, le vide est un vide secondaire, c'est-à-dire que la pression est de 10⁻³ à 10⁻⁵ Pa, par exemple, de 10⁻⁴ Pa.

De préférence, le gaz neutre est de l'argon.

L'invention permet même d'utiliser de l'argon de qualité commerciale (avec généralement 5 ppm d'O₂).

Les pièces à assembler sont soumises, par exemple, dans le four à un cycle thermique.

Ainsi, l'ensemble formé par les pièces et la composition de brasure peut-il être amené à la température de brasage en observant une montée en température de préférence « lente », avec une ou plusieurs rampes de température depuis la température ambiante.

Cette montée en température peut se faire par exemple avec une rampe de température à raison de 1°C à 5°C/minute.

Le palier de brasage est généralement réalisé à une température, qui est la température de brasage, de préférence supérieure d'au moins 15°C, et de préférence encore d'au moins 30°C, à la température de fusion ou température de liquidus de la composition de brasure, alliage de brasage retenue.

Pour le brasage de surfaces à braser poreuses, par exemple pour des matériaux composites dont le revêtement en SiC en surface ne serait pas assez épais, il peut être utile de réaliser le brasage à une température comprise entre le liquidus et le solidus de la composition de brasure afin d'avoir une brasure à l'état semi-solide lors du palier de brasage. La brasure est alors visqueuse et l'infiltration de la brasure dans les porosités peut être mieux contrôlée.

La température de brasage est généralement de 1020°C à 1150°C, de préférence de 1080°C à 1100°C, selon la composition de brasure et les proportions relatives de Ni et Si dans cette composition.

En effet, selon les compositions, la température du liquidus varie généralement de 1005°C à 1125°C et la température de brasage variera donc, par exemple, comme précisé plus haut, de 1020°C à 1150°C.

On a mentionné 1020°C pour le point le plus bas de la température de brasage car le procédé fonctionne même avec un écart de 15°C entre la température de fusion et la température de brasage, mais un écart d'au moins 30°C est généralement préférable pour les grandes pièces, et la température de brasage la plus basse est alors de 1055°C. De même, la température de brasage la plus haute peut être de 1150°C.

Une telle température de fusion des compositions permet, selon un autre avantage du procédé de l'invention, une utilisation de l'assemblage, jusqu'à 850°C et même jusqu'à 880°C.

De manière surprenante, bien que la température de brasage des compositions de brasure selon l'invention soit inférieure à 1150°C, un excellent accrochage et un très bon mouillage du carbure de silicium sont obtenus avec une cinétique de mouillage rapide comme le montrent les essais de goutte posée réalisés avec ces compositions de brasure, ainsi il est possible (voir exemples 1 et 2), d'obtenir un angle de contact inférieur à 40° après brasage pendant 30 minutes à 1100°C.

Cet excellent mouillage est indispensable pour que la qualité des joints formés soit bonne, car il assure une bonne qualité du remplissage du joint, mais il ne permet pas toujours de garantir un bon comportement mécanique car cette dernière propriété n'est pas prévisible. Or, de manière étonnante, les joints préparés avec des compositions de brasure selon l'invention possèdent aussi d'excellentes propriétés mécaniques.

La température de brasage définie plus haut de 1020°C à 1150°C, de préférence de 1080°C à 1100°C, est maintenue pendant une durée de 1 à 150 minutes, de préférence de 30 à 150 minutes, de préférence encore de 60 à 120 minutes, mieux de 90 minutes à 120 minutes, c'est ce que l'on appelle le palier de brasage.

Pour des matériaux présentant des surfaces à braser relativement poreuses, tels que des matériaux composites dont le revêtement en SiC n'est pas assez épais, il peut être utile de réduire la durée courante du brasage qui est généralement de 30 à 150 minutes, à une durée de quelques minutes, à savoir par exemple, une durée entre 1 et 30 minutes, afin d'éviter trop d'infiltration de la brasure dans les porosités du matériau au détriment du remplissage du joint.

Dans ce cas, notons également que les températures de brasage les plus basses sont généralement recommandées pour limiter l'infiltration, à savoir généralement entre 1000°C ou 1020°C et 1080°C.

La durée du palier de brasage dépend de la taille des pièces à assembler et plus précisément des dimensions des surfaces à braser. On peut, en effet, aller jusqu'à 150 minutes pour de très grandes pièces avec de grandes surfaces à braser, à savoir typiquement au moins 50x50mm².

Un palier de brasage du procédé selon l'invention pourra être par exemple réalisé à une température de brasage de 1100°C pendant 60 à 90 minutes.

La température spécifique du palier de brasage choisie est fonction de la composition de l'alliage de brasage.

Un palier d'homogénéisation par exemple à 900°C est recommandé voire indispensable pour les grandes pièces (typiquement à partir de 50x50 mm²) afin de garantir l'homogénéité thermique au niveau des pièces à assembler.

Il est à noter que la cinétique de mouillage étant déjà bonne, il n'est pas utile d'accélérer le mouillage, déjà excellent, ce premier palier est dans le cas des compositions Ni -Si selon l'invention essentiellement voire uniquement un palier d'homogénéisation.

Ce palier peut être remplacé par une montée en température lente, par exemple vers 900°C.

La durée du premier palier ainsi que la durée du palier de brasage dépendent de la taille du four, des dimensions des pièces à braser et des outillages de maintien des pièces à braser.

Ce premier palier qui est donc un palier d'homogénéisation est généralement observé à une température de 850°C à 910°C, par exemple de 900°C avec une durée minimale recommandée d'une heure, par exemple une durée de 60 à 180 minutes, avant de réaliser le palier de brasage proprement dit dans les conditions déjà mentionnées ci-dessus.

Aussi bien dans la configuration capillaire que dans la configuration « sandwich », un tel premier palier n'est pas indispensable pour les petites pièces. Un tel premier palier est généralement recommandé voire indispensable dans ces deux configurations pour les grandes pièces, à savoir généralement les pièces qui ont des surfaces à braser supérieures à 50x50 mm², afin de garantir l'homogénéité thermique au niveau des pièces à assembler.

La durée de ces paliers peut être augmentée et par exemple être fixée à 180 minutes pour le premier palier et 150 minutes pour le second palier pour des pièces de très grandes dimensions, par exemple avec 0,5 m² de surface à braser ou plus.

Ou bien, une homogénéisation thermique peut également être obtenue en supprimant ce premier palier et en effectuant une montée en température lente (à raison par exemple de 0,5°C/minutes) entre généralement 850°C et 910°C, par exemple vers 900°C, de façon à ce que la durée d'exposition de l'assemblage dans ce domaine de température soit, par exemple, de l'ordre de 60 à 180 minutes.

Comme le premier palier, une telle montée en température lente est conseillée, voire indispensable, pour les grandes pièces dans les deux configurations.

En fin de cycle de brasage, suite au palier de brasage, on refroidit l'assemblage jusqu'à la température ambiante à raison, par exemple, de 5°C ou de 6°C par minute.

Pendant le refroidissement, la brasure se solidifie et l'assemblage des pièces en matériau à base de carbure de silicium est effectif aussi bien dans le cas où l'on a utilisé une configuration « sandwich » que dans le cas où l'on a utilisé une configuration « capillaire ».

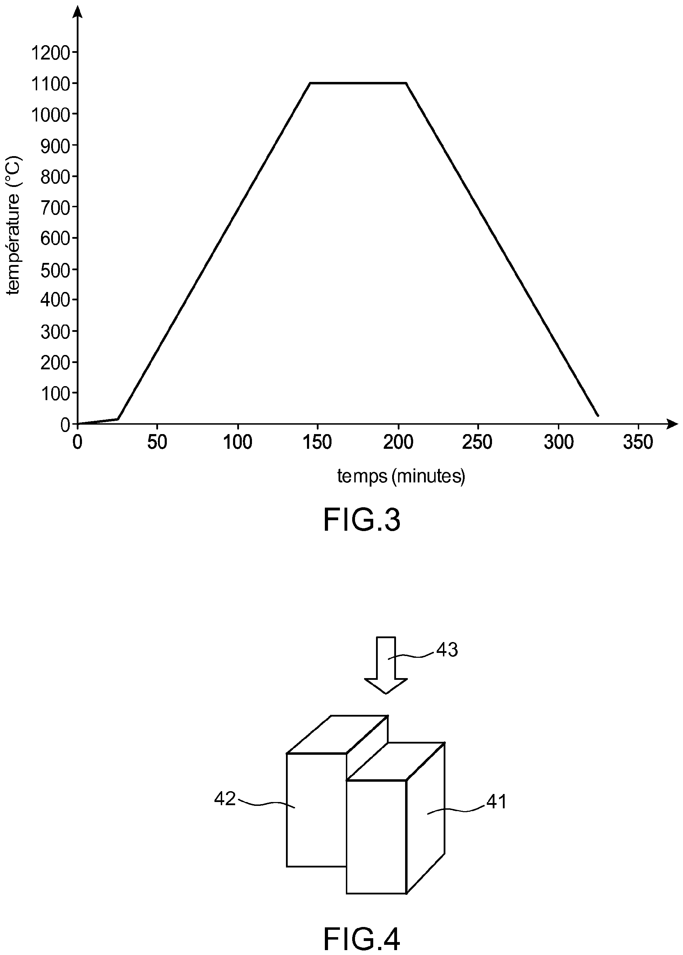

Les assemblages réalisés par le procédé selon l'invention ont été soumis à des tests de compression / cisaillement (voir Figure 4) à température ambiante.

Pour des joints SiC fritté / brasure NiSi selon l'invention sans renfort / SiC fritté, les contraintes à rupture obtenues sur deux assemblages sont 26 MPa et 90 MPa, ce qui est un excellent résultat, très supérieur à ceux obtenus dans le document [3] avec un alliage de brasage NiSi comprenant 65% en masse de Nickel et 35% en masse de silicium.

Pour des joints entre substrats en composite CMC de type Cerasep A40C® (matrice en SiC, fibres en SiC) / brasure NiSi selon l'invention sans renfort / composite CMC, la contrainte à rupture obtenue est de l'ordre de 13 MPa, le point faible de l'assemblage entre la brasure et le CMC se situant au niveau du revêtement du CMC, qui est du SiC préparé par dépôt chimique en phase vapeur (CVD).

Les assemblages de pièces en carbure de silicium comportant des joints préparés par le procédé selon l'invention permettent de réaliser des structures, appareils, composants de formes complexes ayant des températures d'utilisation élevées pouvant aller jusqu'à 850°C, voire 880°C avec une grande précision.

On sait en effet que les propriétés du carbure de silicium :
- grande dureté ;
- grande rigidité ;
- faible densité ;
- bas coefficient de dilatation ;
- résistance à la rupture élevée ;
- bonne résistance au choc thermique ;
- ainsi que sa très bonne conductivité en font un matériau incontournable pour les présentes et les futures applications industrielles, en particulier à haute température.

De plus, le SiC présente une très bonne résistance chimique aux divers acides, y compris l'acide fluorhydrique et une très bonne résistance à l'oxydation sous air à haute température jusqu'à 1300°C.

En d'autres termes, le procédé selon l'invention peut notamment s'appliquer à la fabrication de tout dispositif, appareil, structure, composant, nécessitant un assemblage moyennement réfractaire entre au moins deux substrats, pièces à base de carbure de silicium en garantissant à la fois une bonne tenue mécanique et une étanchéité satisfaisante au niveau de l'assemblage.

Ce type de dispositif, appareil, structure, composant peut répondre à des besoins dans différents domaines :
- le domaine du génie thermique, notamment pour concevoir des échangeurs de chaleur très performants car le carbure de silicium présente une bonne conductivité thermique et une bonne tenue aux hautes températures dans des environnements extrêmes.
- le domaine du génie mécanique pour réaliser dans des dispositifs embarqués des composants légers, rigides, réfractaires, résistant à l'abrasion et résistant aux sollicitations mécaniques.
- le domaine du génie chimique car le carbure de silicium est résistant à de nombreux produits chimiques corrosifs comme par exemple les bases et les acides forts.
- le domaine du génie nucléaire pour la réalisation du gainage des combustibles.
- les domaines de l'optique spatiale (miroir de télescope en SiC) et de l'aéronautique (pièce en composite SiC/SiC).
- l'électronique de puissance qui utilise des substrats en SiC.

L'invention va maintenant être décrite au moyen des exemples suivants donnés, bien entendu, à titre illustratif et non limitatif.

### Exemples :

### Exemple 1 :

Cet exemple décrit des essais de goutte posée réalisés avec une composition de brasure, alliage de brasage selon l'invention de composition 64% de Si, 36% de Ni, en % atomiques, soit 46% de Si et 54% de Ni en % massique sur du SiC α pur fritté, en observant un unique palier de brasage à 1100°C.

### a) Préparation de la composition de brasure et de la pâte de brasure.

La brasure de composition visée 64% atomiques de Si et 36% atomiques de Ni a été préparée à partir de morceaux de Si et de morceaux de Ni purs.

Ces morceaux ont été pesés en respectant les proportions de la composition de brasure et placés dans un creuset en alumine. L'ensemble a été placé dans un four métallique et soumis à un cycle thermique avec un palier à 1250°C sous argon pendant 120 minutes.

On obtient ainsi, après refroidissement, un lingot. Ce lingot est concassé pour obtenir une poudre.

Un liant organique (cément NICROBRAZ®) a été ajouté à ce mélange de poudres afin de former une pâte visqueuse.

### b) Essai de « goutte posée » à 1100°C

La pâte de brasure ainsi préparée est utilisée pour former un petit amas de brasure d'une masse de l'ordre de 50 mg. Cet amas de brasure est déposé sur une plaque de SiC préalablement nettoyée.

L'ensemble de l'amas de brasure et de la plaque est placé dans un four de brasage, dans le cas présent un four métallique, et soumis à un cycle thermique de brasage sous vide secondaire avec un seul et unique palier, qui est le palier de brasage, à 1100°C.

L'amas de brasure fond lors de ce traitement thermique et forme une goutte que l'on appelle « goutte posée ».

Un hublot permet de suivre *in situ* l'étalement de la goutte.

L'angle de mouillage, contact, de la goutte est mesuré sur la goutte liquide *in situ* à travers le hublot.

L'angle de mouillage est de l'ordre de 60° après 5 minutes, de l'ordre de 50° après 20 minutes et inférieur à 40° après 30 minutes de palier, ce qui correspond à un bon mouillage.

Ensuite, le SiC et sa goutte de brasure solidifiée ont été découpés, enrobés et polis et ont été observés par microscopie électronique à balayage.

L'interface SiC/brasure ne présente pas de réactivité à l'échelle de la microscopie électronique à balayage, c'est-à-dire qu'il n'y a pas de formation de nouveau composé. En particulier, il n'y a pas eu de formation de composés fragiles à l'interface.

### Exemple 2 :

Cet exemple décrit des essais de goutte posée réalisés avec une composition de brasure, alliage de brasage selon l'invention de composition 64% de Si, 36% de Ni, en % atomiques, soit 46% de Si et 54% de Ni en % massique sur un composite SiC/SiC Cerasep A40C®, en observant un unique palier de brasage à 1100°C.

### a) Préparation de la composition de brasure et de la pâte de brasure.

La brasure de composition visée 64% atomiques de Si et 36% atomiques de Ni a été préparée comme indiqué dans l'exemple 1.

Une pâte de composition de brasure a été formée comme dans l'exemple 1

### b) Essai de « goutte posée » à 1100°C

La pâte de brasure ainsi préparée est utilisée pour former un petit amas de brasure d'une masse de l'ordre de 50 mg. Cet amas de brasure est déposé sur une plaque de composite SiC/SiC avec une matrice en SiC et des fibres en SiC. Ce composite est disponible auprès de la société Snecma Propulsion Solide sous la dénomination CERASEP A40C®. Cette plaque a été préalablement nettoyée avant de déposer la brasure.

L'ensemble de l'amas de brasure et de la plaque est placé dans un four de brasage, dans le cas présent un four métallique, et soumis à un cycle thermique de brasage sous vide secondaire avec un seul et unique palier, qui est le palier de brasage, à 1100°C pendant 60 minutes.

L'amas de brasure fond lors de ce traitement thermique et forme une goutte que l'on appelle « goutte posée ».

Un hublot permet de suivre *in situ* l'étalement de la goutte.

L'angle de mouillage, contact, de la goutte est mesuré sur la goutte liquide *in situ* à travers le hublot.

L'angle de mouillage est de l'ordre de 40° dès 5 minutes de palier, de 30° après 30 minutes de palier, et inférieur à 20° après 60 minutes de palier ce qui correspond à un bon mouillage.

Ensuite, le composite et sa goutte de brasure solidifiée ont été découpés, enrobés et polis et ont été observés par microscopie électronique à balayage.

L'interface CMC/brasure ne présente pas de réactivité à l'échelle de la microscopie électronique à balayage, c'est-à-dire qu'il n'y a pas de formation de nouveau composé. En particulier, il n'y a pas eu de formation de composés fragiles à l'interface.

### Exemple 3 :

Cet exemple décrit la préparation de liaisons, assemblages entre deux pièces en carbure de silicium SiC α pur fritté, en mettant en oeuvre le procédé de brasage selon l'invention, le brasage étant réalisé en configuration capillaire en utilisant une composition de brasure, alliage de brasage selon l'invention constituée de 64% de Si, 36% de Ni, en % atomiques, soit 46% de Si et 54% de Ni en % massique. Cet exemple décrit, en outre, des essais, tests mécaniques réalisés sur ces assemblages.

### a) Préparation de la composition de brasure, de la pâte de brasure, et des pièces à assembler

La brasure de composition visée, à savoir 64% atomiques de Si et 36% atomiques de Ni, a été préparée de la manière décrite dans l'exemple 1.

Une pâte de composition de brasure a été formée comme dans l'exemple 1.

Les pièces en SiC fritté à assembler sont des plaques de dimensions 20x10 mm² et d'épaisseur 1,5 mm.

Les pièces sont nettoyées à l'acétone puis à l'éthanol et enfin séchées.

Les substrats, pièces sont mis en contact en laissant un petit décalage de 1 à 2 mm, de façon à laisser un espace pour déposer la pâte de brasure à proximité du joint (cette configuration est appelée configuration capillaire). La pâte est déposée avec une spatule sur la surface disponible au bord du joint, sous la forme d'un cordon de brasure (voir la figure 2). La quantité de brasure déposée est comprise entre 20 et 30 mg pour cet assemblage.

### b) Brasage

Les pièces mises en contact et prêtes à être brasées sont placées dans un four de brasage (four métallique dans le cas présent) sous vide secondaire et soumises à un cycle thermique de brasage sous vide qui comprend un seul palier de 60 minutes à 1100°C, qui est le palier de brasage.

Le cycle thermique est représenté sur la Figure 3.

### c) Observation du joint

Après refroidissement, l'ensemble est bien assemblé. Le joint a été caractérisé en microscopie électronique à balayage. Il n'y a pas de « manque » et une réactivité entre le SiC et la brasure n'est pas mise en évidence à l'échelle d'observation de la microscopie électronique à balayage.

### d) Préparation des éprouvettes d'essais mécaniques et résultats des essais mécaniques

Des assemblages, éprouvettes (2 éprouvettes) d'essais mécaniques ont été préparés par brasage de 2 pièces de dimensions chacune 20x10x1,5 mm³ (l'épaisseur de l'éprouvette brasée est donc 1,5 + 1,5 = 3 mm) (41, 42) avec la pâte de brasure préparée en a) ci-dessus et dans les conditions de brasage décrites en b) ci-dessus. En effet, la mécanique des céramiques étant statistique, on prépare en vue des essais plus d'une éprouvette mais avec le même procédé de fabrication.

Les éprouvettes sont schématisées sur la Figure 4. Elles sont fixées dans un montage et sollicitées en cisaillement lors d'un test de compression / cisaillement (43) à température ambiante.

Il est à noter que ce test ne permet pas de garantir du cisaillement pur mais c'est le mode préférentiel. Ce test permet cependant de comparer les assemblages entre eux.

### • Résultats des essais mécaniques :

Les contraintes à rupture déterminées pour chacune des 2 éprouvettes sont 26 MPa et 90 MPa.

La rupture a lieu dans le SiC, ce qui est caractéristique de liaisons fortes entre la brasure et le substrat en SiC.

Il est à noter que les valeurs de contraintes à rupture de jonctions, assemblages du type SiC/brasure riche en Si/SiC peuvent être plus ou moins dispersées du fait du caractère fragile des matériaux céramiques.

### Exemple 4 :

Cet exemple décrit la préparation de liaisons, assemblages entre deux pièces en CMC, plus précisément en composite SiC/SIC avec une matrice en SiC et des fibres en SiC, en mettant en oeuvre le procédé de brasage selon l'invention, le brasage étant réalisé en configuration capillaire en utilisant une composition de brasure, alliage de brasage selon l'invention constituée de 64% de Si, 36% de Ni, en % atomiques, soit 46% de Si et 54% de Ni en % massique. Cet exemple décrit, en outre, des essais, tests mécaniques réalisés sur ces assemblages.

### a) Préparation de la composition de brasure, de la pâte de brasure, et des pièces à assembler

La brasure de composition visée, à savoir 64% atomiques de Si et 36% atomiques de Ni a été préparée de la manière décrite dans l'exemple 1.

Une pâte de composition de brasure a été formée comme dans l'exemple 1.

Les pièces, substrats à braser, assembler, sont des plaques en composite SiC/SiC avec une matrice en SiC et des fibres en SiC. Un tel matériau composite est disponible auprès de la société Snecma Propulsion Solide sous la dénomination Cerasep A40C®. Ces plaques sont de dimensions 20x10 mm² et d'épaisseur 1,5 mm.

Les pièces sont nettoyées à l'acétone puis à l'éthanol et enfin séchées.

Les substrats, pièces sont mis en contact en laissant un petit décalage de 3 mm, de façon à laisser un espace pour déposer la pâte de brasure à proximité du joint (cette configuration est appelée configuration capillaire). La pâte est déposée avec une spatule sur la surface disponible au bord du joint, sous la forme d'un cordon de brasure (voir la figure 2), comme on l'a décrit dans l'exemple 3. La quantité de brasure déposée est comprise entre 180 et 220 mg pour cet assemblage.

Cette quantité de pâte est très supérieure à celle de l'exemple 3, car le jeu entre les plaques en CMC est bien plus important que celui avec les plaques en SiC fritté de l'exemple 3.

Ainsi, l'épaisseur du joint peut atteindre 500 µm pour les plaques en CMC du fait des défauts de planéité, alors qu'il est en général inférieur à 100 µm pour les plaques en SiC.

### b) Brasage

Les pièces mises en contact et prêtes à être brasées sont placées dans un four de brasage sous vide secondaire et soumises à un cycle thermique de brasage sous vide qui comprend, un seul palier de 60 à 90 minutes à 1100°C, qui est le palier de brasage.

Le cycle thermique est représenté sur la Figure 3.

Le brasage est réalisé soit en four métallique avec un palier de 60 minutes à 1100°C , soit en four graphite avec un palier de 90 minutes.

### c) Observation du joint

Après refroidissement, l'ensemble est bien assemblé. Le joint a été caractérisé en microscopie électronique à balayage. Il n'y a pas de « manque » et une réactivité entre le SiC et la brasure n'est pas mise en évidence à l'échelle d'observation de la microscopie électronique à balayage.

L'épaisseur du joint est comprise entre 100 et 500 µm selon les zones observées du fait des défauts locaux du revêtement du CMC et des défauts de planéité.

### d) Préparation des éprouvettes d'essais mécaniques et résultats des essais mécaniques

Des assemblages, éprouvettes (3 éprouvettes) d'essais mécaniques ont été préparés par brasage de 2 pièces de dimensions chacune 20x10x1, 5 mm³ avec la pâte de brasure préparée en a) ci-dessus et dans les conditions de brasage décrites en b) ci-dessus.

Deux assemblages ont été brasés en four métallique avec un palier de 60 minutes à 1100°C.

Un assemblage a été brasé en four graphite avec un palier de 90 minutes à 1100°C.

Les éprouvettes ont des dimensions analogues à celles de l'exemple 3, et sont testées de la même manière en compression / cisaillement.

### • Résultats des essais mécaniques :

Les contraintes à rupture déterminées pour chacune des 3 éprouvettes sont 11 MPa ; 12 MPa ; et 13 MPa.

Pour une éprouvette, la rupture a lieu par arrachement du revêtement en SiC du CMC. Ce revêtement s'avère donc être le point faible de l'assemblage CMC/brasure/CMC.

Pour les deux autres éprouvettes, la contrainte mesurée correspond au début de dégradation du composite.

### REFERENCES

[1] Gasse A., Coing-Boyat G., Bourgeois G., *"Method using a thick joint for joining parts in SiC-based materials by refractory brazing and refractory thick joint thus obtained",* Brevet US-A-5 975 407, 1999.
[2] Gasse A., *"Method for assembling parts made of materials based on SiC by non-reactive refractory brazing, brazing composition, and joint and assembly obtained by said method",* Demande US-A1-2003/0038166.
[3] Heap H., *"Method of Brazing",* Brevet US-A-3 813 759, 1974.
[4] S. Kalogeropoulou, L. Baud, N. Eustathopoulos., "Relationship between wettability and reactivity", Acta. Metall. Mater., Vol. 43, N°3, pp.907-912, 1995.
[5] C. Rado, S. Kalogeropoulou, N. Eustathopoulos., "Wetting and bonding of Ni-Si alloys on silicon carbide", Acta. Metall. Mater., Vol. 47, N°2, pp.461-473, 1999.
[6] J.R. Mc Dermid, R.A.L. Drew., "Thermodynamic brazing alloy design for joining silicon carbide", J. Am. Ceram. Soc.,Vol.74, N°8, pp.1855-1860, 1991.
[7] Montgomery F.C., Streckert H.H., *Braze for Silicon Carbide bodies,* Brevet US-A-5 447 683, 1995.

## Revendications

1. Procédé d'assemblage d'au moins deux pièces (1, 2, 21, 22) en matériaux à base de carbure de silicium par brasage non-réactif, dans lequel on met en contact les pièces (1, 2, 21, 22) avec une composition de brasure non-réactive (3, 26), on chauffe l'ensemble formé par les pièces (1, 2, 21, 22) et la composition de brasure (3, 26) à une température de brasage suffisante pour faire fondre totalement ou au moins partiellement la composition de brasure (3, 26), et on refroidit les pièces (1, 2, 21, 22) et la composition de brasure afin de former après solidification de celle-ci un joint moyennement réfractaire ; **caractérisé en ce que** la composition de brasure non-réactive (3, 26) est un alliage binaire, constitué, en pourcentages atomiques, de 60% à 66% de silicium et de 34 à 40% de nickel.

2. Procédé selon la revendication 1, dans lequel la température de brasage est inférieure ou égale à 1150°C, de préférence la température de brasage est de 1020°C à 1150°C, de préférence encore de 1080°C à 1100°C.

3. Procédé selon l'une quelconque des revendications précédentes, dans lequel ladite composition de brasure est un alliage binaire, constitué en pourcentages atomiques de 63 à 65% de silicium et de 35 à 37% de nickel.

4. Procédé selon l'une quelconque des revendications précédentes, dans lequel ladite composition de brasure est un alliage binaire, constitué en pourcentages atomiques de 64% de silicium et de 36% de nickel.

5. Procédé selon l'une quelconque des revendications précédentes, dans lequel on forme une poudre de composition de brasure, on met en suspension cette poudre dans un liant organique de façon à obtenir une suspension ou pâte de composition de brasure (3, 26), et on dépose sur au moins une surface (4, 5) d'au moins une des pièces à assembler (1, 2, 21, 22) la suspension ou pâte de composition de brasure obtenue (3, 26).

6. Procédé selon la revendication 5, dans lequel on enduit au moins une surface à assembler (4, 5) d'au moins l'une des pièces à assembler (1, 2) avec la suspension ou pâte de composition de brasure (3), puis on met en contact les surfaces à assembler (4, 5) des pièces (1, 2) de façon à ce que la suspension ou pâte de composition de brasure (3) soit intercalée entre celles-ci.

7. Procédé selon la revendication 5, dans lequel les surfaces à assembler des pièces à assembler (21, 22) sont mises en contact en observant un décalage (23) entre celles-ci de façon à créer une surface libre (24) susceptible de recevoir la suspension ou pâte de composition de brasure (26) à proximité du joint (25) formé par les surfaces à assembler des pièces à assembler (21, 22), puis on dépose la suspension ou pâte de composition de brasure (26) sur cette surface libre (24) .

8. Procédé selon l'une quelconque des revendications précédentes, dans lequel le brasage est effectué à une température de brasage supérieure d'au moins 15°C, de préférence d'au moins 30°C, à la température de fusion de la composition de brasure.

9. Procédé selon l'une quelconque des revendications précédentes, dans lequel le brasage est réalisé en effectuant un palier de brasage à une température de brasage de 1020°C à 1150°C, de préférence de 1080°C à 1100°C, maintenue pendant une durée de 1 à 150 minutes, de préférence de 30 à 150 minutes, de préférence encore de 60 à 120 minutes, mieux de 90 à 120 minutes.

10. Procédé selon la revendication 9, dans lequel au moins une surface à assembler des pièces à assembler est poreuse et on effectue un palier de brasage à une température de 1020°C à 1080°C pendant une durée de 1 à 30 minutes.

11. Procédé selon la revendication 9 ou 10, dans lequel, préalablement au palier de brasage, on observe un premier palier à une température de 850°C à 910°C, par exemple de 900°C maintenue pendant une durée de 30 à 180 minutes, de préférence de 60 à 180 minutes, de préférence encore de 90 à 180 minutes, par exemple de 120 minutes.

12. Procédé selon l'une quelconque des revendications précédentes, dans lequel les matériaux à base de carbure de silicium sont choisis parmi les carbures de silicium pur tels que le carbure de silicium pur α (SiCα) ou β (SiCβ), et les matériaux composites à base de SiC tels que les composites à fibres et/ou à matrice de carbure de silicium.

13. Procédé selon l'une quelconque des revendications précédentes, dans lequel les matériaux à base de carbure de silicium sont choisis parmi le carbure de silicium fritté sans pression ("PLS-SiC") ; le carbure de silicium infiltré Si ("SiSiC" ou "RBSC") ; le carbure de silicium recristallisé poreux ("RSiC") ; le graphite silicium ("C-SiC") constitué de graphite et recouvert par une couche de SiC ; les composites SiC/SiC ; par exemple, à fibres ou à « whiskers » ; les composites SiC/SiC à matrice auto-cicatrisante ; les composites C/SiC, par exemple, à fibres ou à « whiskers » de carbone et à matrice SiC ; les monocristaux de SiC ; les composites du SiC avec une autre céramique, par exemple les composites SiC/Si₃N₄ et SiC/TiN.

14. Procédé selon l'une quelconque des revendications précédentes, dans lequel lesdits matériaux à base de carbure de silicium ont une teneur en carbure de silicium au moins égale à 50% en masse, de préférence au moins égale à 80% en masse, et de préférence encore égale à 100% en masse.

15. Composition de brasure (3, 26) étant un alliage binaire constitué de silicium et de nickel, **caractérisé en ce que** l'alliage binaire est constitué, en pourcentages atomiques, de 60% à 66% de silicium et de 34% à 40% de nickel, de préférence, de 63% à 65% de silicium et de 35% à 37% de nickel, et de préférence encore, de 64% de silicium et de 36% de nickel.

16. Pâte, suspension, de brasure pour le brasage moyennement réfractaire, non-réactif, de pièces en matériaux à base de carbure de silicium comprenant une poudre d'une composition de brasure non-réactive selon la revendication 15 et un liant, cément organique liquide, ou un gel organique visqueux.

17. Assemblage comprenant au moins deux pièces (1, 2, 21, 22) en matériaux à base de SiC et un joint moyennement réfractaire entre lesdites au moins deux pièces (1, 2, 21, 22) en matériaux à base de SiC, **caractérisé en ce que** ledit joint comprend en pourcentages atomiques, de 60% à 66% de silicium, et de 34% à 40% de nickel.

## Patentansprüche

1. Verfahren zum Zusammenfügen von zumindest zwei Teilen (1, 2, 21, 22) aus Materialien auf Siliciumcarbidbasis durch nicht-reaktives Löten, wobei die Teile (1, 2, 21, 22) mit einer nicht-reaktiven Lotzusammensetzung (3, 26) in Kontakt gebracht werden, die aus den Teilen (1, 2, 21, 22) und der Lotzusammensetzung (3, 26) gebildete Einheit auf eine Löttemperatur erhitzt wird, die ausreicht, um die Lotzusammensetzung (3, 26) vollständig oder zumindest teilweise schmelzen zu lassen, und die Teile (1, 2, 21, 22) und die Lotzusammensetzung abgekühlt werden, um nach deren Erstarren eine mäßig feuerfeste Fuge zu bilden;
**dadurch gekennzeichnet, dass**
die nicht-reaktive Lotzusammensetzung (3, 26) eine binäre Legierung ist, die in Atomprozent zu 60 % bis 66 % aus Silicium und zu 34 bis 40 % aus Nickel besteht.

2. Verfahren nach Anspruch 1, wobei die Löttemperatur geringer oder gleich 1150 °C ist, vorzugsweise die Löttemperatur 1020 °C bis 1150 °C, noch bevorzugter 1080 °C bis 1100 °C beträgt.

3. Verfahren nach einem der vorangehenden Ansprüche, wobei die Lotzusammensetzung eine binäre Legierung ist, die in Atomprozent zu 63 % bis 65 % aus Silicium und zu 35 bis 37 % aus Nickel besteht.

4. Verfahren nach einem der vorangehenden Ansprüche, wobei die Lotzusammensetzung eine binäre Legierung ist, die in Atomprozent zu 64 % aus Silicium und zu 36 % aus Nickel besteht.

5. Verfahren nach einem der vorangehenden Ansprüche, wobei ein Pulver einer Lotzusammensetzung gebildet wird, dieses Pulver in einem organischen Bindemittel in Suspension gebracht wird, so dass eine Suspension oder Paste aus der Lotzusammensetzung (3, 26) erhalten wird, und die erhaltene Suspension bzw. Paste der Lotzusammensetzung (3, 26) auf zumindest eine Fläche (4, 5) zumindest eines der zusammenzufügenden Teile (1, 2, 21, 22) aufgebracht wird.

6. Verfahren nach Anspruch 5, wobei zumindest eine zusammenzufügende Fläche (4, 5) von zumindest einem der zusammenzufügenden Teile (1, 2) mit der Suspension bzw. Masse der Lotzusammensetzung (3) überzogen wird, dann die zusammenzufügenden Flächen (4, 5) der Teile (1, 2) so in Kontakt gebracht werden, dass die Suspension bzw. Masse der Lotzusammensetzung (3) zwischen diesen eingefügt wird.

7. Verfahren nach Anspruch 5, wobei die zusammenzufügenden Flächen der zusammenzufügenden Teile (21, 22) in Kontakt gebracht werden, wobei eine Verschiebung (23) zwischen diesen beachtet wird, so dass eine freie Fläche (24) geschaffen wird, welche die Suspension bzw. Masse der Lotzusammensetzung (26) in der Nähe der Fuge (25) aufnehmen kann, die von den zusammenzufügenden Flächen der zusammenzufügenden Teile (21, 22) gebildet wird, wonach die Suspension bzw. Masse der Lotzusammensetzung (26) auf diese freie Fläche (24) aufgebracht wird.

8. Verfahren nach einem der vorangehenden Ansprüche, wobei das Löten bei einer Löttemperatur erfolgt, die um mindestens 15 °C, vorzugsweise um mindestens 30 °C höher ist als die Schmelztemperatur der Lotzusammensetzung.

9. Verfahren nach einem der vorangehenden Ansprüche, wobei das Löten dadurch erfolgt, dass eine Lötstufe bei einer Löttemperatur von 1020 °C bis 1150 °C, vorzugsweise von 1080 °C bis 1100 °C erfolgt, die für eine Zeitdauer von 1 bis 150 Minuten, vorzugsweise von 30 bis 150 Minuten, noch bevorzugter von 60 bis 120 Minuten, besser von 90 bis 120 Minuten gehalten wird.

10. Verfahren nach Anspruch 9, wobei zumindest eine zusammenzufügende Fläche der zusammenzufügenden Teile porös ist und eine Lötstufe bei einer Temperatur von 1020 °C bis 1080 ° für eine Zeitdauer von 1 bis 30 Minuten erfolgt.

11. Verfahren nach Anspruch 9 oder 10, wobei vor der Lötstufe eine erste Stufe bei einer Temperatur von 850 °C bis 910 °C, beispielsweise bei 900 °C erfolgt, die für eine Zeitdauer von 30 bis 180 Minuten, vorzugsweise von 60 bis 180 Minuten, noch bevorzugter von 90 bis 180 Minuten, beispielsweise 120 Minuten, beibehalten wird.

12. Verfahren nach einem der vorangehenden Ansprüche, wobei die Materialien auf Siliciumcarbidbasis ausgewählt werden aus reinen Siliciumcarbiden, wie etwa aus reinem α-Siliciumcarbid (SiCα) oder β-Siliciumcarbid (SiCβ), aus Verbundwerkstoffen auf Basis von SiC, wie aus Verbundwerkstoffen mit Fasern und/oder mit einer Matrix aus Siliciumcarbid.

13. Verfahren nach einem der vorangehenden Ansprüche, wobei die Materialien auf Siliciumcarbidbasis ausgewählt werden aus drucklos gesintertem Siliciumcarbid ("PLS-SiC"); Si-infiltriertem Siliciumcarbid ("SiSiC" oder "RBSC"); porösem, rekristallisiertem Siliciumcarbid ("RSiC"); Graphit-Silicium ("C-SiC"), das aus Graphit besteht und mit einer Schicht aus SiC überzogen ist; den SiC/SiC-Verbundwerkstoffen; zum Beispiel mit Fasern oder mit «Whiskers»; den SiC/SiC-Verbundwerkstoffen mit selbstheilender Matrix; den C/SiC-Verbundwerkstoffen, zum Beispiel mit Fasern oder mit «Whiskers» aus Kohlenstoff und mit einer SiC-Matrix; den SiC-Einkristallen; den Verbundwerkstoffen aus SiC mit einer anderen Keramik, zum Beispiel SiC/Si₃N₄ und SiC/TiN-Verbundwerkstoffen.

14. Verfahren nach einem der vorangehenden Ansprüche, wobei die Materialien auf Siliciumcarbidbasis einen Siliciumcarbidgehalt von mindestens gleich 50 Masse-%, vorzugsweise mindestens gleich 80 Masse-%, noch bevorzugter gleich 100 Masse-% haben.

15. Lotzusammensetzung (3, 26), die eine binäre Legierung ist, die aus Silicium und Nickel besteht, **dadurch gekennzeichnet, dass** die binäre Legierung in Atomprozent zu 60 % bis 66 % aus Silicium und zu 34 bis 40 % aus Nickel besteht, vorzugsweise zu 63 % bis 65 % aus Silicium und zu 35 bis 37 % aus Nickel, noch bevorzugt zu 64 % aus Silicium und zu 36 % aus Nickel besteht.

16. Paste, Suspension zum Löten für das mäßig feuerfeste, nicht-reaktive Löten von Teilen auf Siliciumcarbidbasis enthaltend eine Pulver einer nicht-reaktiven Lotzusammensetzung nach Anspruch 15 und ein Bindemittel, organisches Flüssigzement, oder einen organischen, viskosen Gel.

17. Zusammenfügung enthaltend zumindest zwei Teilen (1, 2, 21, 22) aus Materialien auf SiC-Basis und eine mäßig feuerfeste Fuge zwischen den zumindest zwei Teilen (1, 2, 21, 22) aus Materialien auf SiC-Basis, **dadurch gekennzeichnet, dass** die Fuge in Atomprozent 60 % bis 66 % Silicium und 34 % bis 40 % Nickel enthält.

## Claims

1. A method for joining, assembling, at least two parts (1, 2, 21, 22) made of silicon carbide-based materials by non-reactive brazing, wherein the parts (1, 2, 21, 22) are contacted with a non-reactive brazing composition (3, 26), the assembly formed by the parts (1, 2, 21, 22) and the brazing composition (3, 26) is heated to a brazing temperature sufficient to melt the brazing composition (3, 26) totally or at least partly, and the parts (1, 2, 21, 22) and the brazing composition (3, 26) are cooled so that, after solidification of the brazing composition, a moderately refractory joint is formed; **characterized in that** the non-reactive brazing composition (3, 26) is a binary alloy consisting, in atomic percentages, of 60% to 66% silicon and 34% to 40% nickel.

2. The method according to claim 1 wherein the brazing temperature is equal to or lower than 1150°C, preferably the brazing temperature is 1020°C to 1150°C, more preferably 1080°C to 1100°C.

3. The method according to any one of the preceding claims, wherein said brazing composition is a binary alloy consisting, in atomic percentages, of 63 to 65% silicon and 35 to 37% nickel.

4. The method according to any one of the preceding claims, wherein said brazing composition is a binary alloy consisting, in atomic percentages, of 64% silicon and 36% nickel.

5. The method according to any one of the preceding claims, wherein a powder of brazing composition is formed, this powder is placed in suspension in an organic binder to obtain a suspension or paste of brazing composition (3, 26), and the suspension or paste of brazing composition obtained is deposited on at least one surface (4, 5) of at least one of the parts to be joined, assembled (1, 2, 21, 22).

6. The method according to claim 5 wherein at least one surface to be joined, assembled (4, 5), of at least one of the parts to be assembled, joined (1, 2), is coated with the suspension or paste of brazing composition (3), then the surfaces to be joined (4, 5), assembled, of the parts (1, 2) are placed in contact so that the suspension or paste of brazing composition (3) is inserted therebetween.

7. The method according to claim 5 wherein the surfaces to be joined, assembled, of the parts to be assembled, joined (21, 22), are placed in contact leaving an offset (23) between them so as to create a free surface (24) able to receive the suspension or paste of brazing composition (26) in the vicinity of the joint (25) formed by the surfaces to be joined, assembled, of the parts to be assembled, joined (21, 22), then the suspension or paste of brazing composition (26) is deposited on this free surface (24).

8. The method according to any one of the preceding claims wherein brazing is conducted at a brazing temperature at least 15°C, preferably at least 30°C higher than the melting point of the brazing composition.

9. The method according to any one of the preceding claims wherein brazing is conducted observing a brazing plateau at a brazing temperature of 1020°C to 1150°C, preferably 1080°C to 1100°C, held for a time of 1 to 150 minutes, preferably 30 to 150 minutes, more preferably 60 to 120 minutes, further preferably 90 to 120 minutes.

10. The method according to claim 9 wherein at least one surface to be joined of the parts to be assembled is porous and a brazing plateau is observed at a temperature of 1020°C to 1080°C for a time of 1 to 30 minutes.

11. The method according to claim 9 or 10 wherein, prior to the brazing plateau, a first plateau is observed at a temperature of 850°C to 910°C, for example at 900°C held for a time of 30 to 180 minutes, preferably 60 to 180 minutes, more preferably 90 to 180 minutes, for example 120 minutes.

12. The method according to any one of the preceding claims wherein the silicon carbide-based materials are chosen from among pure silicon carbides such as pure α silicon carbide (α-SiC) or pure β silicon carbide (β-SiC), and composite SiC-based materials such as composites with silicon carbide fibres and/or matrix.

13. The method according to any one of the preceding claims wherein the silicon carbide-based materials are chosen from among pressureless sintered silicon carbide ("PLS-SiC"); Si infiltrated silicon carbide ("SiSiC" or "RBSC"); porous recrystallized silicon carbide ("RSiC"); graphite silicon ("C-SiC") consisting of graphite and coated with a SiC layer; SiC/SiC composites; for example, with fibres or whiskers; SiC/SiC composites with self-healing matrix; C/SiC composites, for example with carbon fibres or whiskers and a SiC matrix; SiC monocrystals; SiC composites with another ceramic, for example SiC/Si₃N₄ and SiC/TiN composites.

14. The method according to any one of the preceding claims wherein said silicon carbide-based materials have a silicon carbide content of at least 50% by mass, preferably at least 80% by mass, and more preferably 100% by mass.

15. A brazing composition (3, 26) being a binary alloy consisting of silicium and nickel, **characterized in that** the binary alloy consists, in atomic percentages, of 60% to 66% silicium and 34% to 40% nickel, preferably, of 63% to 65% silicium and 35% to 37% nickel, and more preferably, of 64% silicium and 36% nickel.

16. A brazing paste, suspension for the non-reactive moderately refractory brazing of parts made of silicon carbide-based materials, comprising a powder of a non-reactive brazing composition according to claim 15 and an organic liquid cement, binder, or an organic viscous gel.

17. An assembly comprising at least two parts (1, 2, 21, 22) made of SiC-based materials and a moderately refractory joint between said at least two parts (1, 2, 21, 22) made of SiC-based materials, **characterized in that** said joint comprises, in atomic percentages, 60% to 66% silicium and 34% to 40% nickel.
